(19) Europäisches Patentamt
European Patent Office
Office européen des brevets

(11) **EP 1 997 947 A2**

(12) **EUROPEAN PATENT APPLICATION**

(43) Date of publication:
**03.12.2008 Bulletin 2008/49**

(51) Int Cl.:
***D06F 37/30*** *(2006.01)*

(21) Application number: **08157304.0**

(22) Date of filing: **30.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.06.2007 US 756856**

(71) Applicant: **GENERAL ELECTRIC COMPANY
Schenectady, NY 12345 (US)**

(72) Inventors:
• **Hollenbeck, Robert Keith
Fort Wayne, IN 46814 (US)**

• **Brubaker, Justin
Lafayette Hill, PA 19444 (US)**
• **Crowell, James Robert
Huntertown, IN 46748 (US)**
• **Ley, Bruce Calvin
Ossian, IN 46777 (US)**

(74) Representative: **Illingworth-Law, William Illingworth
GE
London Patent Operation
15 John Adam Street
London
WC2N 6LU (GB)**

(54) **Washing machine apparatus and method**

(57) A washing machine (10) is provided that includes an induction motor (12) and a motor control circuit (14) with a feedback loop. The feedback loop provides rotor (13) speed to a microprocessor (61) of the motor control circuit (14). The motor control circuit (14) and feedback loop control the motor (12) such that the motor (12) operates in a negative slip mode which provides braking to the washing machine (10).

FIG. 3

EP 1 997 947 A2

## Description

BACKGROUND OF THE INVENTION

Field of the Invention

The present disclosure is related to washing machines. More particularly, the present disclosure is related to washing machine braking.

Description of Related Art

Vertical axis washing machines, also known as top loading washing machines, represent a large portion of the overall washing machine consumer market in the United States. Horizontal axis washing machines represent a smaller segment of the United State market and abroad typically represent a larger portion of the overall washing machine consumer market.

Most vertical axis washing machines include a spin cycle for removing water and/or detergents from the laundry using centrifugal force and spinning a wash load tub, also referred to as a laundry tub ("tub") or basket. During a typical spin cycle, the motor, typically an induction motor, of the washing machine spins the tub at relatively high speed(s).

Historically induction motors used in washers have been single phase induction motors or PSC induction motors. More recently 3-phase induction motors, have been used in some commercially available washers. The 3-phase motors in washers for home use are typically powered by standard single phase AC household electric power. As part of a 3-phase induction motor washing machine, a circuit associated with the motor converts the single phase AC household electric power to three phase power; the three phase power is better at motor starting and operates more efficiently than single phase power.

A simplified explanation of an induction motor, ignoring losses follows: The induction motor has a rotor with a short-circuited winding inside a stator with a rotating magnetic field. The flux from the rotating field induces a current flow in the rotor. The frequency of the current flowing is equal to the difference between the rotational speed of the stator field and the rotational speed of the rotor. This difference in speed, or frequency, of the stator magnetic field and the rotor magnetic field is known as the slip.

The rotor current causes a rotor magnetic field, which is spinning relative to the rotor at the slip frequency and relative to the stator field, at the same slip frequency. The interaction between rotor magnetic field and the stator magnetic field generates a torque in the rotor.

A wash load wash cycle has various modes such as fill, drain and spin, agitation, and spin. Braking can occur before, during or after various segments of the wash cycle. Braking can be dictated by wash cycle parameters and also by safety standards, such as UL safety standards. Typical intermittent wash load braking during the spin mode of the wash cycle is performed in accordance with UL safety standards. For example, if a lid, such as the lid of a vertical washing machine, is opened during the spin modes or cycle, the wash load brakes within a predetermined time limit, such as a 7 second stop-time that is a UL safety standard. Other safety standards and/or stop times may also be available for safety purposes during various modes of the wash cycle.

Some prior art washing machines or washers typically rely upon mechanical brakes such as brake pads or shoes to bring a rotating load, such as a washing machine tub, to zero speed or zero angular velocity in a clothes washer.

The use of brake pads or shoes to stop a washing machine tub is costly and also affects the life of the washing machine dependent upon use since each brake shoes or pad has a wear surface that is subject to wear and eventually, after a period of use, will fail due to wear. Hence there is a wide variation in life of a washer model configured with brake pads or shoes, depending upon subjective factors, i.e. the user or consumer's use of the washing machine including frequency of use and type of use. The type of use varies in the selection of cycle such as a gentle cycle or a heavy-duty cycle. The braking of spin associated with a gentle cycle likely causes less brake wear than the braking of spin associated with a heavy-duty cycle. There are also variations in braking dependent upon the load size or water level used. A large load may spin longer and at greater angular velocity than a small load; thus causing greater wear on the brake. A higher water level, using more water than a lower level, less full load, would also require additional spin for water removal and could cause greater wear on the brake.

Other prior art washing machines or washers use permanent magnet motors and control circuits to provide braking to the washer without using a brake pad or shoe applied to the washer tub to bring the rotating load to zero speed or zero angular velocity. Generally a permanent magnet motor operates like a generator when braking; typical excess electrical energy from the generator mode is either dissipated via a brake resistor or a power resistor controlled appropriately or it is sent out to the electrical system using, for example, the line synchronization technique.

Accordingly, there is a need for a washing machine that overcomes, alleviates, and/or mitigates one or more of the aforementioned and other deleterious effects of prior art washing machines.

BRIEF SUMMARY OF THE INVENTION

A washing machine is provided that includes an induction motor and a motor control circuit with a feedback loop. The feedback loop provides rotor speed to a microprocessor of the motor control circuit. The motor control circuit and feedback loop control the motor such that the motor operates in a negative slip mode which provides braking to the washing machine.

An exemplary method of the present invention provides for washing machine braking. The method of braking the washing machine includes: a) providing an induction motor, the induction motor comprising a rotor, a rotor shaft and a stator and configured to receive an input voltage and providing and output torque for spinning a tub of the washing machine; b) providing a motor control circuit comprising a microprocessor and an inverter component, the microprocessor configured to process signals received therein and the inverter configured to receive voltage and frequency adjustment signals from the microprocessor and to provide an adjusted voltage and frequency signal for input to the induction motor and causing the motor to spin the tub of the washing machine at a speed associated with the torque provided by the input voltage and frequency signal; c) providing the microprocessor with a rotor speed feedback signal from the induction motor, the rotor speed feedback signal providing the microprocessor with rotor speed; d) processing with the microprocessor the rotor speed feedback signal to determine an adjusted output voltage and frequency signal for input to the induction motor so that the adjustment causes the induction motor to operate in a negative slip mode where a desired braking torque is developed; e) repeating c) and d) so that the speed of the rotor continues to slow again; and f) wherein in negative slip mode the induction motor provides energy that is dissipated in the motor.

The above brief description sets forth rather broadly the more important features of the present invention in order that the detailed description thereof that follows may be better understood, and in order that the present contributions to the art may be better appreciated. There are, of course, additional features of the invention that will be described hereinafter and which will be for the subject matter of the claims appended hereto.

In this respect, before explaining several embodiments of the invention in detail, it is understood that the invention is not limited in its application to the details of the construction and to the arrangements of the components set forth in the following description or illustrated in the drawings. The invention is capable of other embodiments and of being practiced and carried out in various ways. Also, it is to be understood, that the phraseology and terminology employed herein are for the purpose of description and should not be regarded as limiting.

As such, those skilled in the art will appreciate that the conception, upon which disclosure is based, may readily be utilized as a basis for designing other structures, methods, and systems for carrying out the several purposes of the present invention. It is important, therefore, that the claims be regarded as including such equivalent constructions insofar as they do not depart from the spirit and scope of the present invention.

Further, the purpose of the foregoing Abstract is to enable the Office and the public generally, and especially the scientists, engineers and practitioners in the art who are not familiar with patent or legal terms or phraseology, to determine quickly from a cursory inspection the nature and essence of the technical disclosure of the application. Accordingly, the Abstract is neither intended to define the invention or the application, which only is measured by the claims, nor is it intended to be limiting as to the scope of the invention in any way.

Further, the purpose of the foregoing Paragraph Titles used in both the background and the detailed description is to enable the Office and the public generally, and especially the scientists, engineers and practitioners in the art who are not familiar with patent or legal terms or phraseology, to determine quickly from a cursory inspection the nature and essence of the technical disclosure of the application. Accordingly, the Paragraph Titles are neither intended to define the invention or the application, which only is measured by the claims, nor are they it intended to be limiting as to the scope of the invention in any way.

The above-described and other features and advantages of the present disclosure will be appreciated and understood by those skilled in the art from the following detailed description, drawings, and appended claims.

BRIEF DESCRIPTION OF THE SEVERAL VIEWS OF THE DRAWINGS

**FIG. 1** is a sectional view of a washing machine according to an exemplary embodiment of the present invention;

**FIG. 2** illustrates and exemplary exterior of a typical vertical axis washer, as well as some of the interior components;

**FIG. 3** illustrates an exemplary control circuit of an embodiment of the present invention;

**FIG. 4** is a cross-sectional view of an exemplary 3-phase induction motor comprising a rotor and a stator;

**FIG. 5** illustrates an example of negative slip where the rotor is spinning with an angular velocity $\omega_r$ that is in the same counterclockwise direction as the stator electric field illustrated with arrow $S_{emf}$;

**FIG. 6** illustrates an example braking profile of speed vs. time for an exemplary embodiment of the present invention;

**FIG. 7** illustrates a functional block diagram of an exemplary embodiment of braking of the present invention using negative slip;

DETAILED DESCRIPTION OF THE INVENTION

Washing Machine Introduction

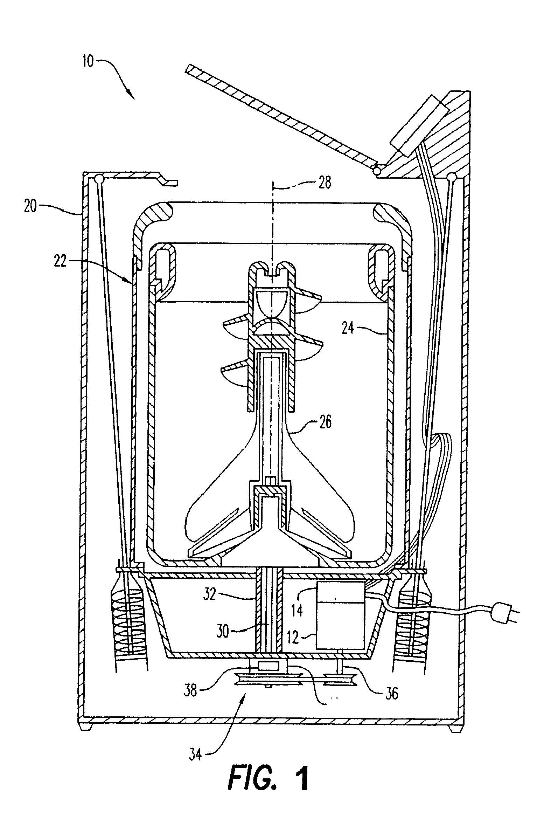

Referring to the drawings and in particular to FIG. 1, a washing machine ("washer") according to an exemplary embodiment of the present invention is illustrated and is generally referred to by reference numeral 10. For purposes of clarity, only those aspects of washer 10 necessary for understanding of the present disclosure are described herein.

Washer 10 includes a motor 12 and a motor control unit 14. Motor 12 is three-phase alternating current (AC) induction motor and, in some embodiments includes motor control unit 14 integral therewith. The motor control, integral therewith is referred to herein as integrated motor control (ICM) or control circuitry. Motor control unit 14 can include circuitry customized for an exemplary embodiment of the present invention.

Washer 10 includes an outer housing 20 supporting a fixed tub 22, a basket or moving tub ("tub") 24, an agitator 26, motor 12, and motor control unit 14 in a known manner. Agitator and basket drive shafts 30, 32 are also illustrated. Basket 24 is configured to hold articles (not shown) such as clothes to be washed. Circuit 14 is configured so that the receipt of a stop signal causes the circuit 14 to control the motor in a manner that brings the basket 24 to a stop.

Advantageously, circuit 14 is configured to provide braking torque. Thus, washer 10 having circuit 14 takes advantage of the induction motor and control to dissipate the braking energy.

During a spin cycle, basket 24 and agitator 26 are configured to be driven by motor 12 to rotate at a high speed about vertical axis 28. In this manner, liquid within the articles is removed by the centrifugal force imparted by the spin cycle and is allowed to exit the basket through openings (not shown). During the spin cycle, basket 24 has an inertial load comprising the inertial load from the articles and inertial load inherent to the basket 24.

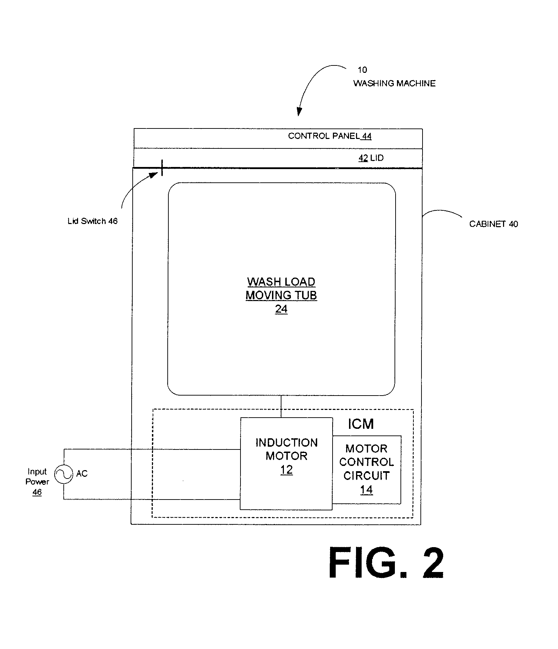

Another exemplary figure of a washer is illustrated in **FIG. 2** which shows the exterior of a typical vertical axis washer, as well as some of the interior components. The washer 10 includes an exterior cabinet 40, a lid 42, a control panel 44, and a lid switch 46. The washer 10 of **FIG 2** further includes a wash load tub 24 (moving tub), an induction motor 12 and an integrated motor control circuit 14, as well as a single phase AC power input 48.

With the advance of electronic components, electric control circuits can be configured to control the braking of the washer 10. As in an exemplary embodiment of the present invention, the lid 42 position can be monitored using a control circuit 14 comprises integrated motor control 14, or portion thereof, that monitors lid 42 position. The lid switch 46 can cause a state change in the monitoring circuit.

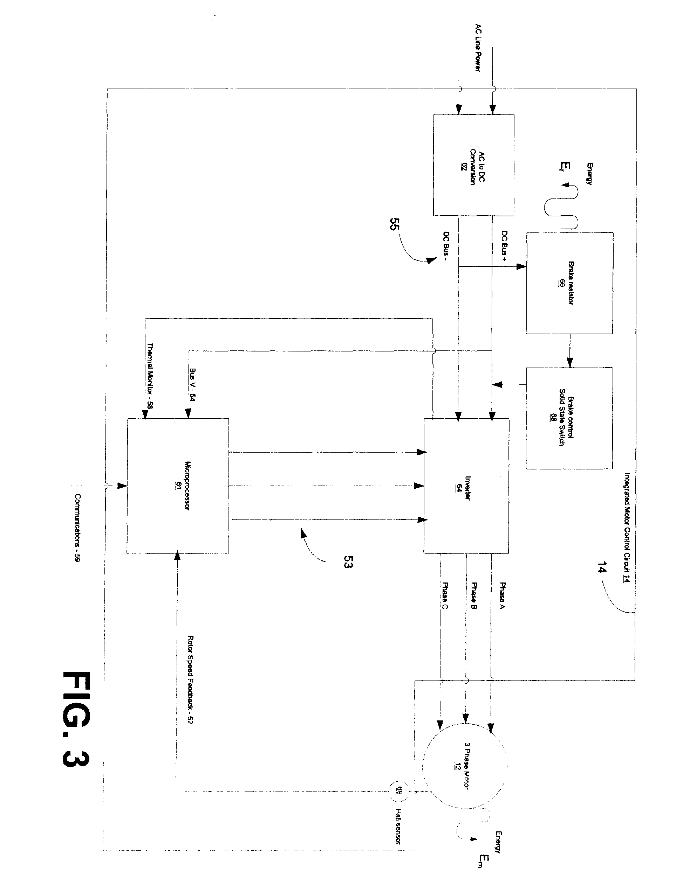

The exemplary electronic control circuits of the present invention include components such as a microprocessor 61 (see **FIG. 3**) that can be programmed using a programming language such as C++ or assembly language. Alternately the microprocessor could be an application specific integrated circuit (ASIC). The type of microprocessor used in the control circuit could be determined by one of ordinary skill in the art.

Another component illustrated in the examples of the present invention is an AC to DC converter component 62 for converting single phase input power, such as conventional residential voltage of 110v, 60Hz in the US, to DC voltage. Additional components are also included in the control circuit, including an inverter 64 for converting single phase DC to three-phase AC power. Again, the choice of component can be determined by one of ordinary skill in the art. For example, the inverter could comprise an IGBT Bridge and Gate Drivers (not shown). The output of exemplary inverter 64 is 3-phase voltage labeled Phase A, Phase B and Phase C in **FIG. 3**. The output voltage of the inverter 64 is input voltage 57 to the 3-phase induction motor 12 that is the exemplary motor for the embodiments of the invention described herein. Another output of the inverter is a thermal monitor signal 58.

The microprocessor 61 can be configured to handle a variety of inputs and provide a variety of outputs, also as determined by one of ordinary skill in the art. Example microprocessors of embodiments of the present invention illustrate inputs comprising DC bus voltage 54, communication (s) signals 59 and rotor speed feedback 52. The present invention is not limited to the inputs illustrated or the combinations of inputs illustrated. The microprocessor 61 further illustrates exemplary outputs 53 from the microprocessor to the inverter. These outputs provide driving signal 53 to the inverter 64 in order to for the inverter 64 provide various output voltages $V$ and frequencies $f$ supplied to the motor 12.

In the exemplary circuits 14 of the present invention, a DC bus is provided, positioned between the converter 62 and inverter 64, for example. Other components, such as, for example a braking resistor 66 and solid state brake control switch 68 can be included, as determined by one of ordinary skill in the art.

The exemplary control circuit also comprises a Hall effect sensor or hall sensor 69. The hall sensor 69 provides monitoring of rotor speed of the motor 12. Other methods of rotor speed monitoring could be used as determined by one of ordinary skill in the art. The rotor speed monitored by the hall sensor 69 and fed back to microprocessor 61 via rotor speed feedback circuit 52.

Returning to **FIG. 3, the** exemplary control circuit 14 of **FIG. 3** further illustrates energy dissipation from the motor 12, $E_m$ and the brake resistor 66, $E_r$. The energy dissipation shown should not be interpreted as constant by its presence on the control circuit 14 illustration, rather, energy dissipation occurs appropriately during the operation of washer 12; appropriate occurrence can be determined by one of ordinary skill in the art.

Negative Slip Braking

An exemplary embodiment of the present invention includes the use of an induction motor. The induction motor is driven by a variable speed control, which together in the operation of a washing machine is called an integrated motor control (ICM) and motor herein. The controller or variable speed control of the washing machine brakes a washing machine load to substantially zero speed. The primary load of the system is inertial load. During braking of the washing machine tub, the induction motor produces torque that slows the speed of the driven load. The external inertia is defined as the inertia of the tub spinning including load articles. The total braking energy can be quantified in terms of the change in system kinetic energy of the washing machine tub driven by the motor and integrated control (ICM). Typically, kinetic energy changes are made through use of a brake shoe or pad applied to the tub; a braking resistor controlled in a suitable manner may also be used to brake the system kinetic energy, either alone or in combination with the brake shoe. The use of typical brake shoes or brake pads applied to the tub is known by one of ordinary skill in the art and is not discussed in detail herein.

In an embodiment of the present invention, the kinetic energy is dissipated in the motor and/or motor control (together referred to as ICM). Braking or dissipating kinetic energy by the present embodiment of the invention may also be called using a deceleration torque

The following describes an example of an embodiment of braking of the present invention. This example of the present invention, identified as deceleration torque, includes operation of the induction motor of the washing machine at a condition or mode called negative slip.

A review of slip is helpful to understand the present deceleration torque example of the invention. In an induction motor, the rotor current causes a rotor magnetic field, which is spinning relative to the rotor at the slip frequency and relative to the stator magnetic field, at the same slip frequency. The interaction between rotor magnetic field and the stator magnetic field generates a torque in the rotor. A difference in speed between the stator field and the rotor field cause an induced current flow in the rotor. This difference in speed, or frequency, of the stator magnetic field and the rotor magnetic field is known as the slip. A positive slip produces positive torque and alternately a negative slip produces a negative torque. Therefore, with positive slip a faster rotating stator field (in the same direction of rotor rotation) produces positive torque; and alternately, with negative slip a faster rotating rotor field (in the same direction of stator field rotation) produces a negative torque.

Negative slip is used advantageously in the present deceleration torque exemplary invention. The usefulness is dependent upon the speed, measured typically in revolutions per minute (rpm). At a fast speed, i.e. about 500_to about 10,000 rpm or more, negative slip generates a large amount of negative torque. At a slow speed, i.e. about _500 rpm, which is a speed less than the fast speed, the large torque that are the result of the fast speed are not produced. The example speeds are a factor of the torque produced by the motor used and therefore vary by motor design or type of motor used..

A DC current $i_{dc}$ is produced and flows out of the induction motor and to a DC bus 55 that is part of the motor 12 and motor control circuit 14 at speeds between about 12000 and about 500 rpm and is dependent upon the motor being in negative slip mode.

$$\text{(4) S1(slow), such as S1(500 rpm)}$$

$$\text{(5) S0(fast), such as S0(12,000 rpm)}$$

In the negative slip mode, the induction motor functions in an alternator mode or generator mode. Rotating energy is converted into a combination of heat in the motor and electricity. Optimum operation during limited braking duration involves operating the motor at a relatively low efficiency to minimize electrical power output that must be dissipated by the motor control (typically through a resistive load). Low-efficiency braking uses the motor thermal mass to store and dissipate the stored braking energy over a relatively long period of time. Negative slip braking is favorable at higher operating speeds, however it is not well suited to bring the load to a complete stop. As operation speeds approach zero the available braking torque diminishes.

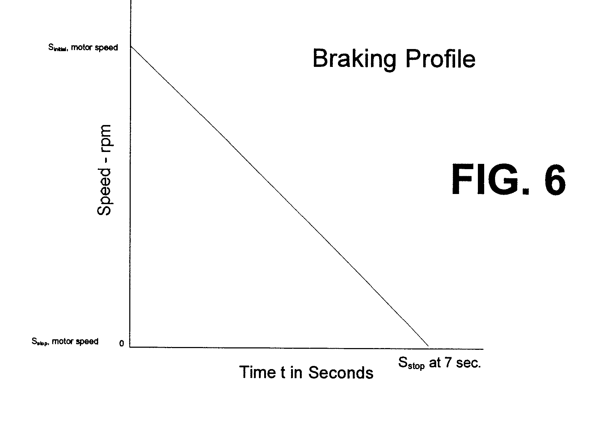

With respect to the integrated motor control and motor (ICM), the induction motor that is used in the present invention has a braking profile that provides current from the induction motor that is within acceptable operating limits for components, such as electronic components, that comprise the motor control circuit. An example braking profile for an exemplary embodiment of the present invention is illustrated in **FIG. 6.** The braking profile or graph illustrates speed vs. time. At an initial speed, $S_{initial}$, braking begins and 7 second later at a stop time $S_{stop}$, the motor is stopped. The voltage and frequency to the motor 12 is adjusted over the course of the 7 seconds using the rotor 13 speed feedback 52 to the microprocessor 61 and the microprocessor output 53 to the inverter 64, which thereby causes appropriate deceleration of motor 12. Appropriate braking profiles can be determined by one of ordinary skill in the art and used with embodiments of the present invention.

**DC Current Injection.** In another embodiment of the present invention, the following is performed approximately after the negative slip braking is performed, and is called current injection for the purposes of identification only. As stated above negative slip braking is favorable at higher operating speeds, however it is not well suited to bring the load to a complete stop. As operation speeds approach zero the available braking torque diminishes. Hence, there is a need for current injection portion of this embodiment of the present invention. With current injection, the DC power applied to windings of the induction motor. This mode is implemented at low speeds to bring the load to zero angular velocity.

Under this current injection braking mode the energy of the load is dissipated in the motor. There is substantially no regeneration power supplied back to the control. For example, at about 500 rpm for an exemplary 3-phase induction motor, the motor 12 of the present invention can operate in DC mode where DC voltage is input to the motor because the torque output at about 500 rpm motor speed or less, is greater when the motor 12 is operating on DC power than on AC power. The determination as to whether the motor input at the about 500 rpm or less, speed can be made by one of ordinary skill in the art.

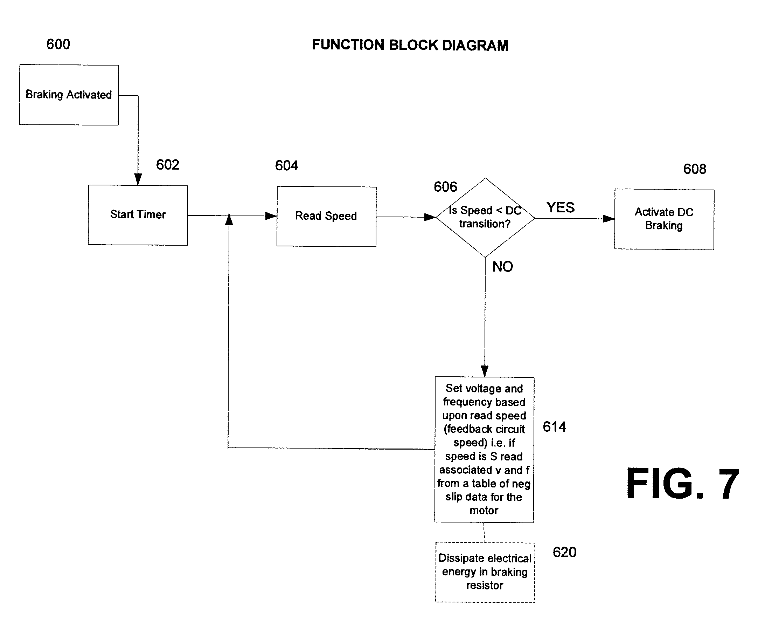

FIG. 7 illustrates a functional block diagram of an exemplary embodiment of braking of the present invention using negative slip. At operator 600, braking is activated; then at operator 602 a start timer begins. Next, at operator 604 speed of the rotor is read. At operator 606 a query is made as to whether the rotor speed is less than a DC transition. If the answer to the query of operator 606 is YES, then at operator 608 DC braking is activated. If the answer to the query of operator 606 is NO, then the voltage and frequency is set based upon the rotor speed from the feedback control system at the last reading, (the voltages and frequencies are in the range of negative slip for the three phase induction motor). When the answer to the query of operator 606 is NO, then next at operator 614 rotor speed read from the feedback circuit is used to determine a voltage and frequency from a data set of voltages and frequencies associated with rotor speed when the motor is operating in negative slip mode. Operator 604 is followed by the operators previously described herein to follow operator 604. Operator 614 returns to operator 604 where rotor speed is read again. Operator 604 is followed by the operators previously described herein to follow operator 604. In an alternate embodiment of the functional block diagram method, at phantom block 620 electrical energy is dissipated in a braking resistor.

The above embodiments of the present invention provide several advantages such as accomplishing braking using motor 12 and motor controller 14 and therefore, eliminates or minimizes the use of heat dissipating braking resistor circuitry and also the use of friction based mechanical braking such as brake pads in washer 10. Depending upon design choices which can be made by one of ordinary skill in the art, braking resistors 66 or brake pads may be included for use before, after or during some braking modes.

Another advantage of the embodiments of the present invention is that they minimize the amount of energy delivered back to the control circuit 14 during braking. This allows for the use of a smaller and thus, more cost-effective resistive load used to dissipate braking energy. Additionally, it reduces stresses on electronic components. Also, the present invention provides a cost effective design since it dissipates energy of the washing machine motor by avoiding the use of prior art elements such as brake shoes or pads. Brake pads add to the unit cost of a washing machine.

In these exemplary embodiments of the present invention the motor is an induction motor and the invention dissipates energy through the use of metal that is part of the induction motor that provides for the specified operation of the motor. Thus, the induction motor, among its various elements, comprises metal. The metal is available for use in the dissipation of energy Additionally, this invention allows the most cost effective system design, as it dissipates energy in the motor to the greatest extent possible. Motors are designed or specified to motoring requirements such as a predetermined torque and speed for motoring output. These requirements are referred to herein as specified motoring requirements. The actual motoring requirements may be, for example 125% of the specified motoring requirements. The 25% requirements above specified requirements for the desired torque and speed is provided so that when the motor runs it does not run at its maximum torque and speed rating, which typically puts destructive stress on the motor. The motor 12 includes a quantity of material or metal, for example, copper for windings, for actual motoring requirements. Thus, for example, the motor 12 includes a quantity of material such as copper or aluminum for windings (i.e. stator windings 15) in order for the motor to obtain the torque and speed of the motoring requirements. Because of concerns for the motor 12, such as longevity, a typical motor may run at less than its specified torque and speed so that stress on the motor is less than it would be if the motor was designed to the lesser predetermined torque and speed. Since extra copper capacity, beyond the capacity needed for the predetermined output torque and speed, is available due to the actual motor requirements used in the design, there is an amount of free material, such as copper of this example, available for dissipation of braking energy. The above actual requirement of 125% is used as an example only and the actual motor requirements, the specified motoring requirements and the free material can be determined by one of ordinary skill in the art. Duty cycle for braking is much less than duty cycle when motor is running so that the motoring requirements upon which excess energy is put, are within acceptable ranges. Hence, the actual energy transferred is less than the energy that is transferred in motoring requirements.

The exemplary embodiments of the present invention use variable speed induction motors. Additionally, control circuits and methods used therewith are tuned to minimize the amount of energy dissipated in the electronic control, which among other advantages, also minimizes product cost.

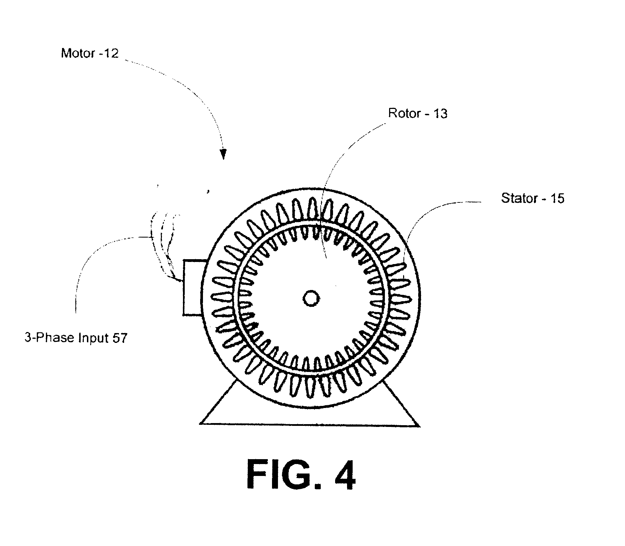

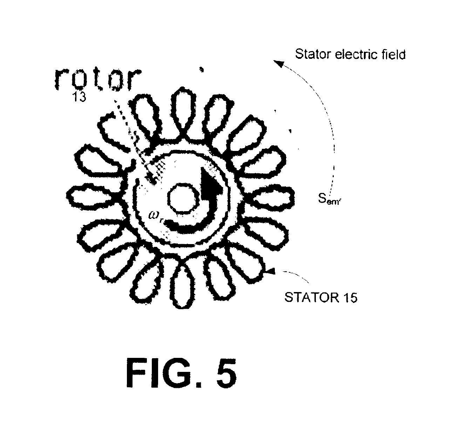

FIG. 4 is a cross-sectional view of an exemplary 3-phase induction motor 12 comprising a rotor 13 and a stator 15. Recall, from above, that with an induction motor 12, rotor 13 current causes a rotor 13 magnetic field, which is spinning relative to the rotor 13 at the rotor current frequency and relative to the stator 15, at the same frequency as the stator 15 magnetic field. The interaction between rotor 13 magnetic field and the stator 15 magnetic field generates a torque in the rotor 13. A difference in speed between the stator 15 field and the rotor 13 field cause an induced current flow in the rotor 13. This difference in speed, or frequency, of the stator 15 magnetic field and the rotor 13 magnetic field is known as slip. If the difference in speed or frequency, of the stator 15 magnetic field and the rotor 13 magnetic field is a negative number, the difference is negative slip. FIG. 5 illustrates an example of negative slip where rotor 13 is spinning with an angular velocity $\omega_r$ that is in the same counterclockwise direction as the stator electric field illustrated with arrow $S_{emf}$.

In addition to the accomplishment discussed above, this exemplary embodiment of the present invention accomplishes braking through the adjustment of output voltage and frequency from the control circuit or integrated motor control 14 so that the tub 24 speed reaches substantially zero speed within a predetermined time limit. Another advantage is that by obtaining an optimal amount of negative slip and applied voltage generator action ceases.

The aforementioned embodiments of the present invention use an exemplary motor platform that is an AC induction motor. In an alternate embodiment of the present invention a different motor platform that is not an AC Induction motor may be used. One of ordinary skill in the art could determine an appropriate motor platform for the present invention.

It should also be noted that the terms "first", "second", "third", "upper", "lower", and the like may be used herein to modify various elements. These modifiers do not imply a spatial, sequential, or hierarchical order to the modified elements unless specifically stated.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Claims**

1. A method of braking a washing machine (10) the method comprising:

a) providing a three phase induction motor (12), the three phase induction motor (12) comprising a rotor (13) and a stator (15) and configured to receive an input voltage and providing and output torque for spinning a tub (24) of the washing machine (10);
b) providing a motor control circuit (14) comprising a microprocessor (61) and an inverter (64) component, the microprocessor (61) configured to process signals received therein and the inverter (64) configured to receive voltage and frequency adjustment signals from the microprocessor (61) and to provide an adjusted voltage and frequency signal for input to the three phase induction motor (12) and causing the motor to spin the tub (24) of the washing machine (10) at a speed associated with torque provided by the input voltage and frequency signal;
c) providing the microprocessor (61) with a rotor speed feedback signal (52) from the three phase induction motor (12), the rotor speed feedback signal (52) providing the microprocessor (61) with rotor speed;
d) processing with the microprocessor (61) the rotor speed feedback (52) signal and the voltage information provided to the inverter (64) to determine an adjusted output voltage and frequency signal for input to the three phase induction motor (12) so that the adjustment causes the three phase induction motor (12) to operate in a negative slip mode where the speed of the rotor (13) is a braking speed that causes the rotor (13) to slow;
e) repeating c) and d) so that the speed of the rotor (13) is another braking speed that causes the rotor (13) to slow again; and
f) wherein in negative slip mode the three phase induction motor (12) provides energy that is dissipated in the rotor (13).

2. The method of claim 1, wherein the energy provided by the three phase induction motor (12) is mechanical heat energy and electrical energy.

3. The method of claim 2, wherein the electrical energy is output to a dc bus of the motor control circuit (14) and wherein the electrical energy output to the dc bus of the motor control circuit (14) is dissipated in a braking resistor.

4. The method of any one of the preceding claims, wherein the method continues until the tub (24) is stopped.

5. The method of any one of the preceding claims, further comprising:

g) operating the three phase induction motor (12) in the dc current mode such that dc current electrical energy is dissipated in the three phase induction motor (12) so that the three phase induction motor stops.

6. A method of braking a washing machine (10) the method comprising:

a) providing an induction motor (12), the induction motor (12) comprising a rotor (13) and a stator (15)and configured to receive an input voltage and providing and output torque for spinning a tub (24) of the washing machine (10) ;

b) providing a motor control circuit (14) comprising a microprocessor (61) and an inverter (64) component, the microprocessor (61) configured to process signals received therein and the inverter (64) configured to receive voltage and frequency adjustment signals from the microprocessor (61) and to provide an adjusted voltage and frequency signal for input to the induction motor (12) and causing the motor to spin the tub (24) of the washing machine (10) at a speed associated with the torque provided by the input voltage and frequency signal;

c) providing the microprocessor (61) with a rotor speed feedback (52) signal from the induction motor (12), the rotor speed feedback (52) signal providing the microprocessor (61) with rotor speed;

d) processing with the microprocessor (61) the rotor speed feedback (52) signal and the voltage adjustment signals to determine an adjusted output voltage and frequency signal for input to the induction motor (12) so that the adjustment causes the induction motor (12) to operate in a negative slip mode where the speed of the rotor (13) is a braking speed that causes the rotor (13) to slow;

e) repeating c) and d) so that the speed of the rotor (13) is another braking speed that causes the rotor (13) to slow again; and

f) wherein in negative slip mode the induction motor (12) provides energy that is dissipated in the rotor (13).

7. The method of claim 6, wherein the energy provided by the induction motor (12) is mechanical heat energy and electrical energy.

8. The method of claim 7, wherein the electrical energy is output to a dc bus of the motor control circuit (14) and wherein the electrical energy output to the dc bus of the motor control circuit (14) is dissipated in a braking resistor.

9. The method of any one of claims 6 to 8, further comprising:

g) operating the induction motor (12) in the dc current mode such that dc current electrical energy is dissipated in the induction motor (12) so that the induction motor stops.

10. A washing machine (10) comprising:

a motor (12) comprising a motor input, a rotor (13) and a stator;
a motor control circuit (14) comprising a microprocessor (61), an inverter (64) and a sensor device (69);
the microprocessor (61) configured to receive rotor speed feedback (52) from the sensor device (69) and to provide output adjustment instructions to the inverter (64) ;
the inverter (64) configured to the receive output adjustment instructions from the microprocessor (61) and provide output voltage signals to the motor input;

wherein the output voltage signal to the motor (12) causes the motor to operate in negative slip mode for braking, where the motor (12) is spinning in a direction of the stator magnetic field;

wherein the inverter (64) continues to provide output adjustment instructions as the control circuit receives the feedback from the sensor (69) and the microprocessor (61) provides output adjustment instruction to the inverter (64) ; and

wherein by running the control circuit with the rotor speed feedback (52) the motor (12) obtains an amount of negative slip that causes applied voltage generator action to stop.

**FIG. 1**

10
WASHING MACHINE

CONTROL PANEL 44

42 LID

Lid Switch 46

CABINET 40

WASH LOAD
MOVING TUB
24

ICM

INDUCTION
MOTOR
12

MOTOR
CONTROL
CIRCUIT
14

Input
Power
46

AC

# FIG. 2

**FIG. 3**

FIG. 4

Stator electric field

$S_{emf}$

STATOR 15

rotor
13

$\omega$

FIG. 5

Braking Profile

FIG. 6

FUNCTION BLOCK DIAGRAM

**600** Braking Activated

**602** Start Timer

**604** Read Speed

**606** Is Speed < DC transition?

NO

YES

**608** Activate DC Braking

**614** Set voltage and frequency based upon read speed (feedback circuit speed) i.e. if speed is S read associated v and f from a table of neg slip data for the motor

**620** Dissipate electrical energy in braking resistor

# FIG. 7